# EUROPÄISCHE PATENTSCHRIFT

(11) **EP 1 165 981 B1**
(45) Veröffentlichungstag und Bekanntmachung des Hinweises auf die Patenterteilung: **04.08.2004**
(21) Anmeldenummer: 99964361.2
(22) Anmeldetag: 23.11.1999
(51) Int. Cl.: F16D 48/06

(54) **SYSTEM ZUR STEUERUNG EINER SERVOKUPPLUNG**
SYSTEM FOR CONTROLLING A SERVO CLUTCH
SYSTEME PERMETTANT DE COMMANDER UN EMBRAYAGE ASSERVI

(30) Priorität: 30.03.1999 DE 19914399
(43) Veröffentlichungstag der Anmeldung: 02.01.2002
(73) Patentinhaber: ROBERT BOSCH GMBH, 70442 Stuttgart (DE)
(72) Erfinder: LOEFFLER, Martin, D-71364 Winnenden (DE); BOLZ, Martin-Peter, D-71720 Oberstenfeld (DE); HUELSER, Juergen, D-70329 Stuttgart (DE)
(86) Internationale Anmeldenummer: PCT/DE1999/003712
(87) Internationale Veröffentlichungsnummer: WO 2000/060249

(56) Entgegenhaltungen:
- EP-A- 0 241 289
- DE-A- 19 823 764
- PATENT ABSTRACTS OF JAPAN vol. 009, no. 124 (M-383), 29. Mai 1985 (1985-05-29) & JP 60 008553 A (ISUZU JIDOSHA KK;OTHERS: 01), 17. Januar 1985 (1985-01-17)

## Beschreibung

### Stand der Technik

Das erfindungsgemäße System geht aus von einer Servokupplung mit den Merkmalen des Oberbegriffs des Anspruchs 1 beziehungsweise des Anspruchs 10.

Automatische Kupplungen bzw. Servokupplungen sind beispielsweise bekannt aus "Kraftfahrttechnisches Taschenbuch", Auflage 1991, Seiten 538 und 539. Servokupplungen bieten in Verbindung mit elektronischen Steuergeräten entweder einen automatisierten Anfahrvorgang oder, zusammen mit servobetätigten Schaltgetrieben, ein vollautomatisches Getriebe. Bei solchen Kupplungen wird das Öffnen und Schließen der Kupplung im allgemeinen durch einen Servoantrieb getätigt. Die Ansteuerung dieses Servoantriebs muß verhindern, daß die Motordrehzahl unter eine bestimmte Mindestdrehzahl absinkt, um den Motor nicht abzuwürgen. Bei herkömmlichen Systemen wird deshalb die Kupplung geöffnet, sobald die von einem Drehzahlfühler erfaßte Drehzahl des Motors bzw. die Drehzahl der Eingangswelle des Getriebes unter eine Schwelle sinkt.

Falls die Motordrehzahl, ausgehend von hohen Werten bei geschlossener Kupplung, sehr schnell sinkt, versucht der Servoantrieb die Kupplung zu öffnen, sobald die Motordrehzahl die Schwelle unterschreitet. Wegen der Trägheit des Systems dauert es jedoch eine gewisse Zeit, bevor die Kupplung soweit geöffnet ist, daß die Motordrehzahl nicht mehr weiter sinkt. Sinkt die Motordrehzahl nun zu schnell ab, kann es passieren, daß sie die Schwelle unterschreitet, bevor die Kupplung hinreichend weit geöffnet ist und so der Motor abgewürgt wird. Um dieses Abwürgen zu verhindern, legen bisherige Steuerungen die Schwelle hinreichend hoch. Hierdurch wird aber bei langsamen Verzögerungen die Kupplung schon bei zu hohen Motordrehzahlen geöffnet. Hier besteht das Problem, daß die Kupplung erst wieder geschlossen werden muß, wenn der Fahrer nicht länger verzögern sondern beschleunigen will. Ein System, bei dem die Öffnungsgeschiwindigkeit der Kupplung abhängig vom Gradienten der Motordrehzahl gewählt wird, ist aus DE 198 23 764 A bekannt.

Die Aufgabe der vorliegenden Erfindungsmeldung besteht darin, die Kupplung in allen Betriebssituationen geeignet zu öffnen.

Diese Aufgabe wird durch die kennzeichnenden Merkmale der Ansprüche 1 und 10 gelöst.

### Vorteile der Erfindung

Wie erwähnt geht die Erfindung aus von einem Verfahren bzw. einer Vorrichtung zur Steuerung einer im Antriebsstrang eines Kraftfahrzeugs zusammen mit einem Fahrzeugmotor angeordneten Servokupplung. Die Servokupplung wird dabei mittels eines ansteuerbaren Stellgliedes im Sinne eines Öffnens und Schließens betätigt. Weiterhin wird eine Drehzahlgröße, die eine Drehbewegung eines Drehteils im Antriebsstrang repräsentiert, erfaßt sowie eine die zeitliche Änderung der erfaßten Drechzahlgröße repräsentierende Gradientengröße ermittelt und das Stellglied abhängig von der erfaßten Drehzahlgröße und abhängig von der ermittelten Gradientengröße im Sinne eines Öffnens der Kupplung angesteuert.

Der Kern der Erfindung besteht darin, daß die Geschwindigkeit des Öffnens der Kupplung wenigstens abhängig von der erfaßten Drehzahlgröße geschieht. In einer vorteilhaften Ausgestaltung der Erfindung ist vorgesehen, daß die erfaßte Drehzahlgröße mit einem vorgegebenen oder vorgebbaren ersten Schwellenwert verglichen wird. Das Stellglied wird dann abhängig von dem Vergleich im Sinne eines Öffnens der Kupplung angesteuert. Hierbei ist insbesondere vorgesehen, daß das Stellglied im Sinne eines Öffnens der Kupplung dann angesteuert wird, wenn die Drehzahlgröße den ersten Schwellenwert unterschreitet. Der erste Schwellenwert liegt dabei vorteilhafterweise relativ niedrig, z.B. in der Nähe der Leerlaufdrehzahl des Fahrzeugmotors.

In einer weiteren Ausgestaltung der Erfindung ist vorgesehen, daß die erfaßte Drehzahlgröße mit einem vorgegebenen oder vorgebbaren zweiten Schwellenwert verglichen wird. Das Stellglied wird nur dann abhängig von der ermittelten Gradientengröße im Sinne eines Öffnens der Kupplung angesteuert, wenn die Drehzahlgröße den zweiten Schwellwert unterschreitet. Der erste Schwellenwert wird vorteilhafterweise kleiner gewählt als der zweite Schwellenwert. Der zweite Schwellenwert liegt vorteilhafterweise relativ deutlich über der Leerlaufdrehzahl des Fahrzeugmotors.

Gemäß einer Ausgestaltung der Erfindung wird die Gradientengröße mit einem vorgegebenen oder vorgebbaren dritten Schwellenwert verglichen wird. Das Stellglied wird dann abhängig von dem Vergleich im Sinne eines Öffnens der Kupplung angesteuert. Insbesondere ist dabei vorgesehen, daß das Stellglied im Sinne eines Öffnens der Kupplung dann angesteuert wird, wenn die Gradientengröße den dritten Schwellenwert unterschreitet.

Weiterhin kann vorgesehen sein, daß der erste Schwellenwert abhängig von der Gradientengröße vorgegeben wird. Der erste Schwellenwert kann dabei durch eine Rechenvorschrift oder eine Kennlinie oder ein Kennfeld wenigstens abhängig von der Gradientengröße vorgegeben werden.

In einer besonders bevorzugten Ausgestaltung der Erfindung wird wenigstens abhängig von der Gradientengröße entschieden wird, ob eine Ansteuerung der Kupplung im Sinne eines Öffnens der Kupplung stattfindet. Soll die Kupplung geöffnet werden, so geschieht die Geschwindigkeit des, Öffnens der Kupplung weiterhin abhängig von der ermittelten Gradientengröße.

Bei dieser Ausgestaltung ist es besonders vorteilhaft, wenn
- die Kupplung bei kleineren Werten der Drehzahlgröße schneller geöffnet wird als bei größeren Werten der Drehzahlgröße und/oder
- die Kupplung bei kleineren Werten der Gradientengröße schneller geöffnet wird als bei größeren Werten der Gradientengröße.

Die Ansteuerung des Stellgliedes im Sinne eines Öffnens der Kupplung geschieht im allgemeinen durch ein Ansteuersignal, wobei das Ansteuersignal abhängig von der erfaßten Drehzahlgröße und abhängig von der ermittelten Gradientengröße gebildet wird.

Die Erfindung verbessert die Ansteuerung einer automatisierten Kupplung in dem Sinne, daß auch Situationen wie Notbremsungen, Blockierbremsungen oder allgemein Bremsmanöver auf Fahrbahnen mit niedrigem Reibwert (z.B. Eis, Schnee) sicher beherrscht werden, obwohl die Kupplung außerhalb solcher Situationen erst bei relativ kleinen Motordrehzahlen geöffnet wird. Ein Öffnen bei möglichst kleinen Drehzahlen hat den Vorteil, daß sehr lange eine kraftschlüssige Verbindung zwischen Antriebsmotor und angetriebenen Rädern besteht und das Fahrzeug deshalb bei erneutem Beschleunigungswunsch spontan reagiert. Das Abwürgen des Motors wird durch die Erfindung in jedem Falle sicher verhindert.

Weitere vorteilhafte Ausgestaltungen der Erfindung sind in Unteransprüchen zu entnehmen.

### Zeichnung

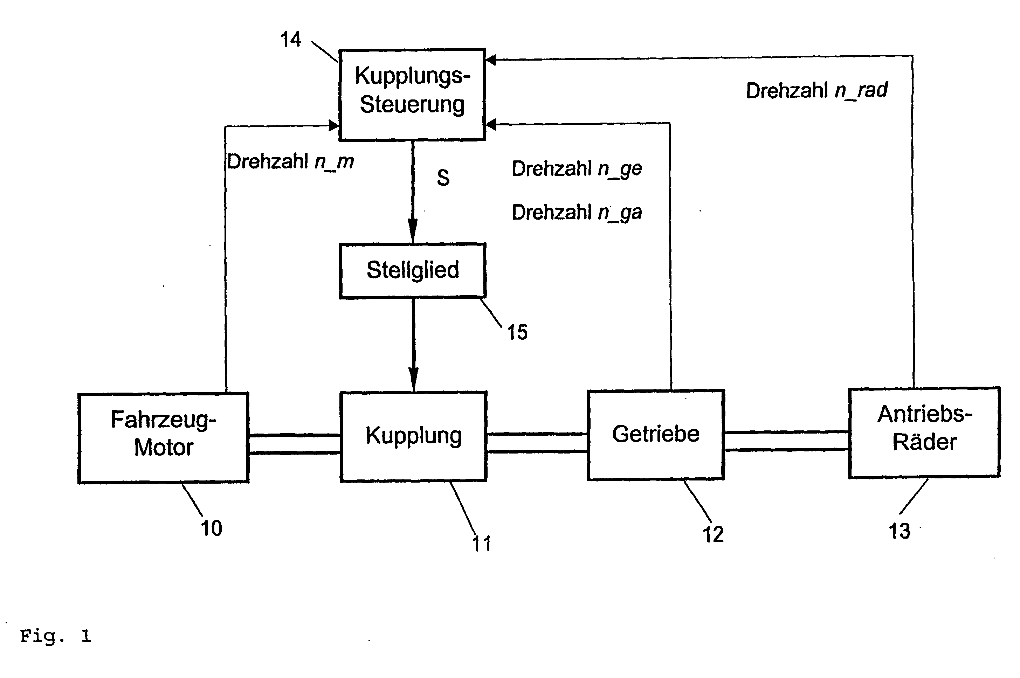

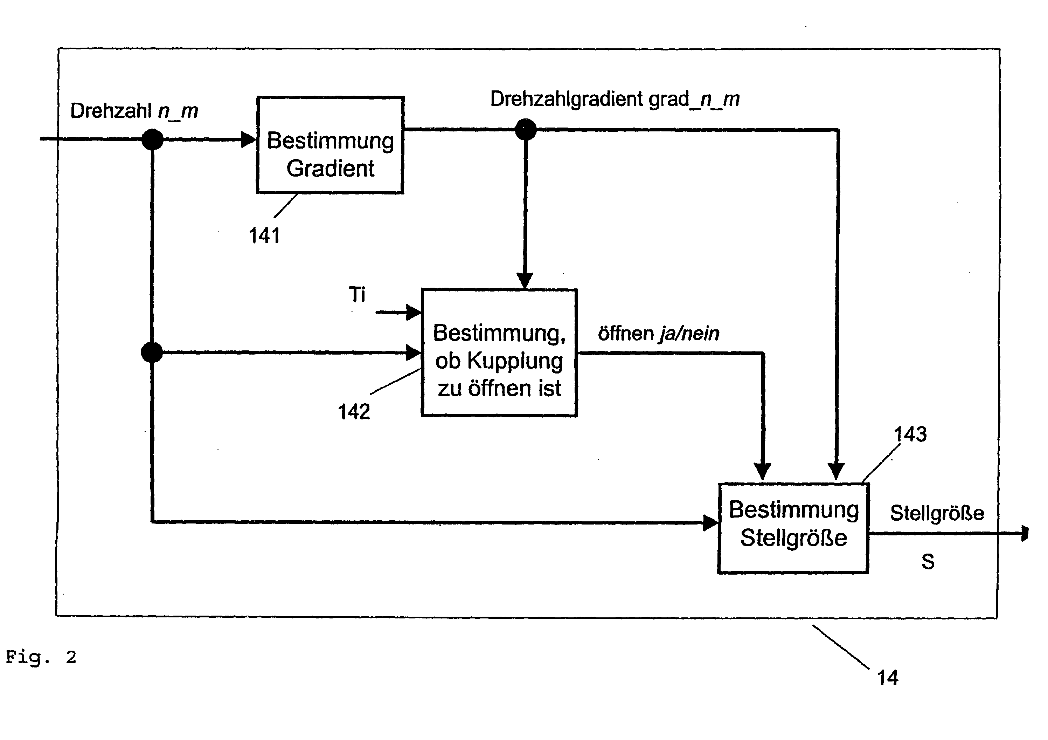

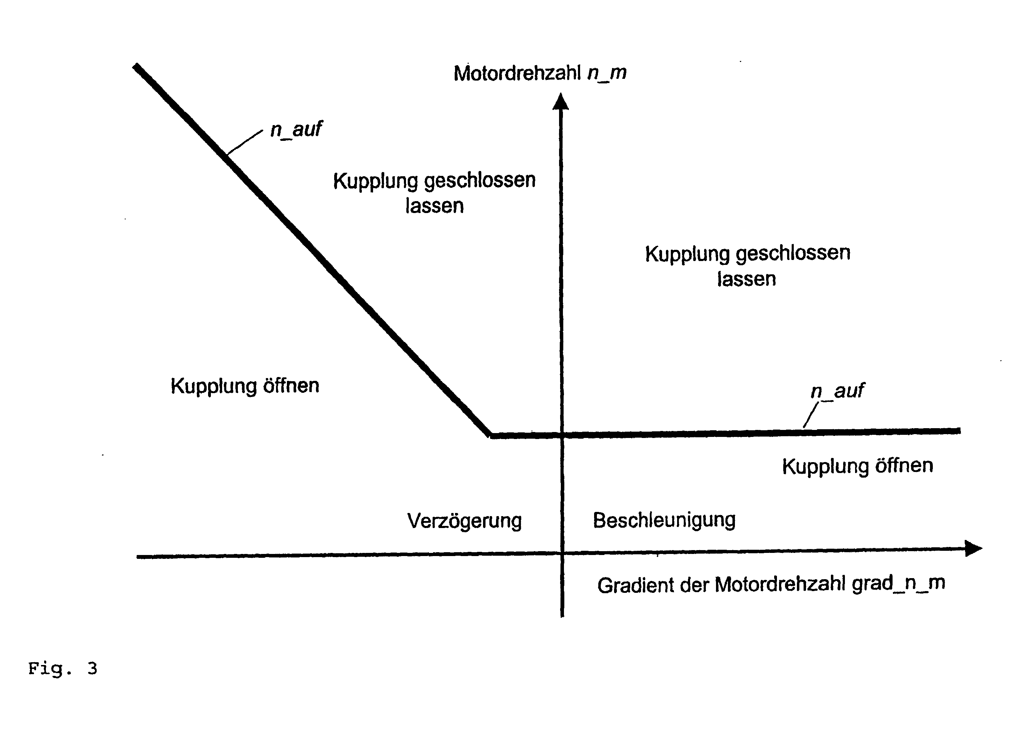

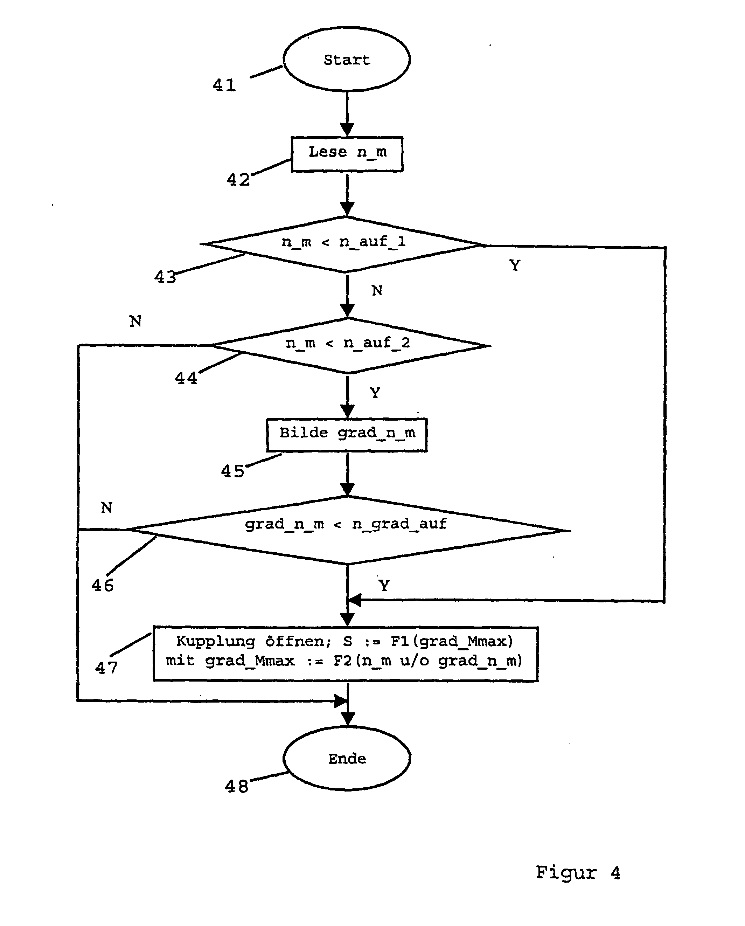

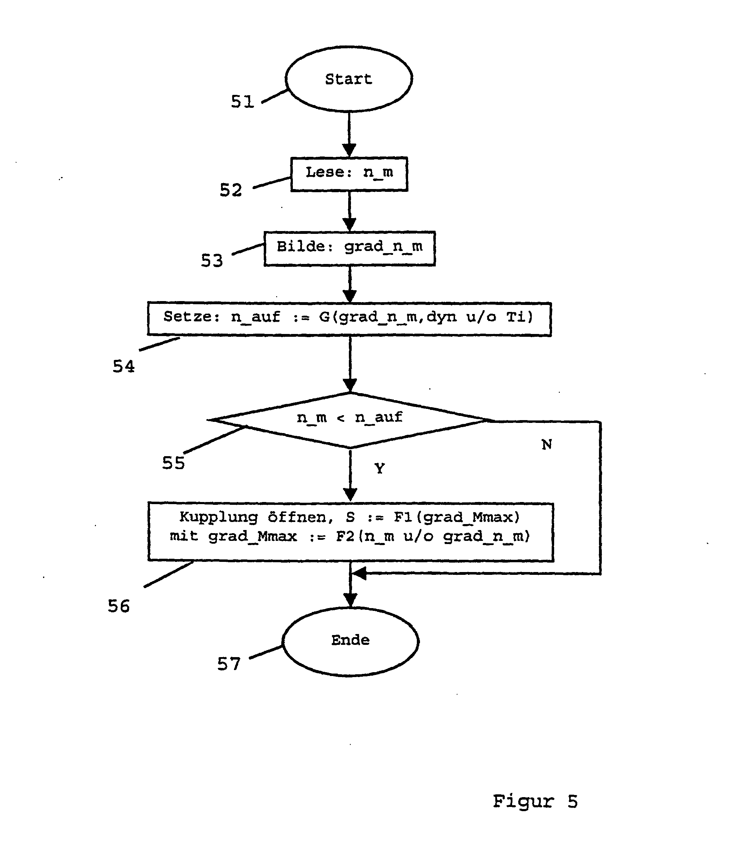

Die Figur 1 zeigt schematisch den Antriebsstrang eines Fahrzeugs mit der zugehörigen Kupplungssteuerung. In der Figur 2 wird die Kupplungssteuerung näher dargestellt. Die Figur 3 offenbart den Verlauf eines Schwellenwertes, während die Figuren 4 und 5 Ablaufdiagramme zweier Ausführungsbeispiele darstellen.

### Ausführungsbeispiel

Anhand des im folgenden beschriebenen Ausführungsbeispiels soll die Erfindung verdeutlicht werden.

Den grundsätzlichen Aufbau des Antriebsstrangs eines Fahrzeugs zeigt die Figur 1. Zwischen dem Fahrzeugmotor 10 und dem Getriebe 12 befindet sich eine Servokupplung 11, die über ein Stellglied 15 von einer elektronischen Kupplungssteuerung 14 gesteuert wird (Ansteuersignal S). Das Stellglied 15 ist in der Lage, den Abstand der (nicht dargestellten) Kupplungsscheiben und damit das übertragbare Drehmoment der Kupplung 11 einzustellen. Das Getriebe 12 mit einer Einund einer Ausgangswelle leitet das Drehmoment des Fahrzeugmotors 10 auf die Antriebsräder 13.

Für die erfindungsgemäße elektronische Kupplungssteuerung wird eine Information bzgl. einer Drehzahl im Antriebsstrang benötigt wird. Diese Drehzahl kann sein:
- die Drehzahl n_m des Antriebsmotors 10 oder
- die Drehzahl n_ge der Eingangswelle des Getriebes 12 oder
- die Drehzahl n_ga der Ausgangswelle des Getriebes 12 oder
- die Drehzahl n_rad eines oder mehrerer angetriebener Räder 13.

Alternativ kann auch direkt die Fahrzeuggeschwindigkeit benutzt werden, falls diese dem Kupplungssteuergerät 14 zur Verfügung gestellt wird. Die Fahrzeuggeschwindigkeit kann z.B. von einem Bremssteuergerät (z.B. Antiblockier-Steuergerät) zur Verfügung gestellt werden.

Das Kupplungssteuergerät 14 kann diese Drehzahlen erhalten, indem es entweder mit einem geeigneten Sensor in Signalverbindung steht und dessen Signale auswertet oder indem es mit einem anderen Steuergerät, das Signale der genannten Sensoren auswertet, in Signalverbindung steht.

In den folgenden Ausführungen wird nur Bezug auf die Motordrehzahl n_m genommen, die genannten Vorgehensweisen gelten aber analog auch für die anderen Drehzahlen bzw. für die Fahrzeuggeschwindigkeit.

Wird bei Kraftfahrzeugen die Servokupplung 11 zwischen dem Fahrzeugmotor 10 und dem Getriebe 12 nicht mehr direkt vom Fahrer sondern automatisch von einem Steuergerät 14 über ein geeignetes Stellglied 15 (z.B. einer durch einen Elektromotor betätigten Hydraulik) betätigt, so muß die Steuerung gewährleisten, daß auch in kritischen Situationen ein "Abwürgen" des Motors, d.h. ein Absinken der Motordrehzahl n_m unter einen Mindestwert, sicher verhindert wird. Wie schon eingangs erwähnt treten besondere Probleme auf, wenn sich die Drehzahl n_rad der angetriebenen Räder 13 und damit, im Falle geschlossener Kupplung 11, auch die Motordrehzahl n_m sehr schnell vermindert, weil dann die begrenzte Dynamik des Kupplungsstellglieds 15 und der Kupplung 11 unter Umständen ein rechtzeitiges Öffnen nicht mehr erlaubt. Die genannte starke Verminderung der Drehzahlen der angetriebenen Räder tritt besonders bei starken Bremsmanövern auf Fahrbahnbelägen mit geringem Reibwert (z.B. Eis, Schnee) auf. Auch bei Fahrzeugen mit einem Antiblockiersystem sind sehr stark negative Gradienten der Raddrehzahlen möglich, die zu einem Abwürgen des Motors 10 führen können.

Im folgenden wird beschrieben, wie insbesondere bei Not- und Blockierbremsungen solch ein Abwürgen des Motors sicher verhindert werden kann.

Wie schon eingangs beschrieben soll die Ansteuerung S des Stellgliedes 15 verhindern, daß die Motordrehzahl n_m unter eine Mindestdrehzahl n_m_min absinkt, um den Motor nicht abzuwürgen. Bei herkömmlichen Systemen wird deshalb die Kupplung geöffnet, sobald die von einem Drehzahlfühler erfaßte Drehzahl des Motors bzw. die Drehzahl der Eingangswelle des Getriebes unter eine Schwelle n_auf sinkt. Falls die Motordrehzahl n_m, ausgehend von hohen Werten bei geschlossener Kupplung, sehr schnell sinkt, versucht der Servoantrieb die Kupplung 11 zu öffnen, sobald die Motordrehzahl den Wert n_auf unterschreitet. Wegen der Trägheit des Systems dauert es jedoch eine gewisse Zeit, bevor die Kupplung 11 soweit geöffnet ist, daß die Motordrehzahl n_m nicht mehr weiter sinkt. Sinkt die Motordrehzahl n_m nun zu schnell ab, kann es passieren, daß sie den Wert n_m_min unterschreitet, bevor die Kupplung 11 hinreichend weit geöffnet ist und so der Motor 10 abgewürgt wird. Um dieses Abwürgen zu verhindern, kann die Schwelle n_auf hinreichend hoch gewählt werden. Hierdurch wird aber bei langsamen Verzögerungen die Kupplung 11 schon bei zu hohen Motordrehzahlen geöffnet. Hier besteht das Problem, daß die Kupplung 11 erst wieder geschlossen werden muß, wenn der Fahrer nicht länger verzögern sondern beschleunigen will.

Im folgenden wird nun ein Ausführungsbeispiel beschrieben, mit dem die Kupplung 11 bei geringer Verzögerung relativ spät geöffnet wird, während sie bei starker Verzögerung so früh geöffnet wird, daß ein Abwürgen des Motors 10 sicher verhindert wird.

Die Figur 2 zeigt die genaue Funktion der Kupplungssteuerung 14. Im Block 141 wird der Gradient grad_n_m der Motordrehzahl n_m (bzw. einer anderen Drehzahl) gebildet. Im Block 142 wird abhängig von der Motordrehzahl n_m und dem Gradienten grad_n_m der Motordrehzahl entschieden, ob die Kupplung 11 geöffnet werden soll. Zusätzlich kann in den Block 142 der noch zu beschreibende Temperaturwert Ti eingelesen werden. Im Block 143 wird die Stellgröße S für das Stellglied 15 der Kupplung 11 so generiert, daß die Kupplung 11 geöffnet wird. Wie noch gezeigt wird, kann die Stellgröße S wiederum von der Motordrehzahl n_m und/oder ihrem Gradienten grad_n_m abhängen.

Zunächst wird beschrieben, wie die Entscheidung getroffen wird, ob die Kupplung geöffnet werden soll. Hierzu werden in den Figuren 4 und 5 zwei Möglichkeiten vorgestellt.

Nach dem Startschritt 41 wird in dem in der Figur 4 gezeigten Ablauf im Schritt 42 die aktuelle Motordrehzahl n_m eingelesen. Im Schritt 43 wird abgefragt, ob die aktuelle Motordrehzahl n_m unterhalb eines Schwellenwertes n_auf_1 liegt. Mit dem Schritt 47 wird die Kupplung 11 immer dann geöffnet, wenn die Motordrehzahl n_m unterhalb der Schwelle n_auf_1 liegt. Dieser Wert liegt vorteilhafterweise in der Nähe der Leerlaufdrehzahl des Antriebsmotors 10. Wird ein andere Drehzahlinformation als die Motordrehzahl zur Kupplungssteuerung herangezogen, so muß selbstverständlich die Drehzahlübersetzung zwischen der Motordrehzahl und dieser Drehzahl berücksichtigt werden.

Weiterhin soll die Kupplung 11 auch dann geöffnet werden, wenn die Motordrehzahl n_m unterhalb einer zweiten Schwelle n_auf_2 liegt und der (negative) Gradient grad_n_m der Motordrehzahl unterhalb der Schwelle n_grad_auf liegt. Dies wird mit den Schritten 44 bis 46 realisiert.

Liegt der aktuelle Wert n_m der Motordrehzahl oberhalb der Schwelle n_auf_1, so wird die Motordrehzahl n_m im Schritt 44 mit dem Schwellenwert n_auf_2 verglichen. Die Schwelle n_auf_2 ist dabei größer als die Schwelle n_auf_1.

Liegt die Motordrehzahl n_m über der Schwelle n_auf_2, so wird direkt zum Endschritt 48 gegangen, das heißt, daß der Kupplungszustand unverändert bleibt, die Kupplung also im allgemeinen geschlossen bleibt.

Unterschreitet jedoch die Motordrehzahl n_m die Schwelle n_auf_2, so wird im Schritt 45 der Gradient grad_n_m , also die zeitliche Änderung der Motordrehzahl, gebildet. Dies geschieht im allgemeinen durch Differenzieren.

Der so gebildete Motordrehzahlgradient grad_n_m wird im Schritt 46 mit der Schwelle n_grad_auf verglichen. Hierbei ist zu beachten, daß bei sinkender Motordrehzahl der Gradient grad_n_m negativ ist. Überschreitet der Motordrehzahlgradient grad_n_m die Schwelle n_grad_auf, so liegt entweder gar kein Absinken der Motordrehzahl oder nur ein Absinken mit geringerer Änderungsrate vor. In diesem Fall wird direkt zum Endschritt 48 gegangen, das heißt, daß der Kupplungszustand unverändert bleibt, die Kupplung also im allgemeinen geschlossen bleibt.

Unterschreitet jedoch der Motordrehzahlgradient grad_n_m die Schwelle n_grad_auf, so liegt ein Absinken mit hoher Änderungsrate vor. In diesem Fall wird im Schritt 47 die Kupplung geöffnet.

Nach dem Endschritt 48 wird der in der Figur 4 gezeigte Ablauf erneut gestartet.

Die Figur 5 zeigt eine weitere Vorgehensweise auf. Hierbei wird die Schwelle n_auf, unterhalb derer die Kupplung 11 geöffnet werden soll, abhängig vom Gradienten grad_n_m der Motordrehzahl bestimmt. Diese Schwelle kann entweder durch eine Rechenvorschrift bestimmt werden oder aus einer Kennlinie abgelesen werden. Hierzu wird nach dem Startschritt 51 in dem in der Figur 5 gezeigten Ablauf im Schritt 52 die aktuelle Motordrehzahl n_m eingelesen und im Schritt 53 der Gradient grad_n_m gebildet.

Im Schritt 54 wird der Schwellenwert n_auf als Funktion G des Gradienten (und gegebenenfalls anderer Größen) bestimmt. Wie schon erwähnt kann dies entweder durch eine Rechenvorschrift bestimmt werden oder aus einer Kennlinie bzw. einem Kennfeld abgelesen werden. Ein Beispiel einer solchen Kennlinie zeigt die Figur 3. Hier wird abhängig von dem Gradienten grad_n_m ein Wert für die Schwelle n_auf abgelesen. Bei Motordrehzahlen, die größer als die Schwelle n_auf sind, bleibt die Kupplung geschlossen (Endschritt 57), bei kleineren Motordrehzahlen wird die Kupplung geöffnet (Schritt 56). Diese Abfrage ist im Schritt 55 zu sehen.

Besonders vorteilhaft ist es, bei der oben erwähnten Rechenvorschrift bzw. bei der Kennlinie die Dynamik des Stellgliedes 15 der Kupplung 11 und die Dynamik der Kupplung 11 zu berücksichtigen. Dies ist im Schritt 54 mit der Abhängigkeit des Schwellenwertes n_auf von dem Parameter dyn gekennzeichnet. Hier ist es besonders vorteilhaft, wenn die Dynamik der Kupplung 11 und ihres Stellgliedes 15 so berücksichtigt wird, daß die Motordrehzahl n_m bei jedem Gradienten grad_n_m der Motordrehzahl den gleichen Minimalwert erreicht, wenn die Kupplung hinreichend weit geöffnet ist, um ein weiteres Absinken der Motordrehzahl zu verhindern.

Falls die Kupplung 11 durch ein hydraulisches Stellglied betätigt wird, ist es besonders vorteilhaft, bei der Berücksichtigung der Dynamik des Stellgliedes die Temperatur der Kupplung 11 und/oder die Temperatur des Stellgliedes 15 und/oder die Temperatur des Motors 10 zu berücksichtigen, da die Dynamik hydraulischer Systeme meist stark temperaturabhängig ist. Diese Temperaturabhängigkeit ist im Schritt 54 mit der Abhängigkeit des Schwellenwertes n_auf von dem Temperaturwert Ti gekennzeichnet.

Bisher wurde dargestellt, wie entscheiden wird, ob die Kupplung geöffnet werden soll. Im folgenden soll nun erläutert werden, wie die Kupplung geöffnet werden soll, wenn entschieden wurde, daß die Kupplung zu öffnen ist. Dies bedeutet, daß auf die Bestimmung der Stellgröße S für das Stellglied 15 der Kupplung 11 näher eingegangen werden (Blöcke 47 und 56 der Figuren 4 und 5).

Die Kupplungssteuerung muß jederzeit die Stellgröße S bestimmen, mit denen das Stellglied 15 der Kupplung die Kupplung 11 ansteuert. Solche Stellgrößen können sein:
- Das maximal übertragbare Drehmoment Mmax der Kupplung oder
- ein Abstand zwischen den Kupplungsscheiben oder
- ein Verfahrweg für das Stellglied.

In den folgenden Ausführungen wird nur auf ein maximal übertragbares Drehmoment Mmax der Kupplung Bezug genommen, sie gelten jedoch analog auch für einen einzustellenden Abstand der Kupplungsscheiben bzw. für einen einzustellenden Verfahrweg für das Stellglied 15.

Die Bestimmung der Stellgröße S hängt davon ab, ob die Kupplung 11 geöffnet werden soll oder nicht. Soll die Kupplung geöffnet werden, muß ein maximal übertragbares Drehmoment Mmax von 0 Nm von ihr gefordert werden. Wird dieses Moment jedoch schlagartig gefordert, wenn die Kupplung geöffnet werden soll, so erfolgt das Öffnen meist abrupt und unkomfortabel. Deshalb ist es vorteilhaft, die Kupplung 11 langsam zu öffnen, d.h. das maximal übertragbare Drehmoment Mmax langsam bis auf den Wert Null abzusenken.

Besonders vorteilhaft ist es hier, einen Gradient grad_Mmax für das maximal übertragbare Drehmoment vorzugeben, mit dem dieses Moment abgesenkt werden soll. Dies ist in den Blöcken 47 und 56 dargestellt, indem die Stellgröße S als Funktion F1 des Gradienten grad_Mmax bestimmt wird.

Weiterhin ist es vorteilhaft, wenn dieser Gradient grad_Mmax, wie in den Blöcken 47 und 56 gezeigt, von der Motordrehzahl n_m und/oder dem Gradienten grad_n_m der Motordrehzahl (oder einer der anderen ober erwähnten Drehzahlen oder der Fahrzeuggeschwindigkeit) abhängt.

Hierbei ist es besonders vorteilhaft, wenn die Kupplung 11 um so schneller geöffnet wird, je niedriger die Motordrehzahl ist. Weiterhin ist es vorteilhaft, die Kupplung 11 um so schneller zu öffnen, je stärker negativ der Gradient der Motordrehzahl ist.

Vorteilhaft ist es ebenfalls, die Kupplung abrupt und schnellstmöglich zu öffnen, wenn die Motordrehzahl besonders niedrig und/oder ihr Gradient besonders stark negativ ist.

## Patentansprüche

1. Verfahren zur Steuerung einer im Antriebsstrang eines Kraftfahrzeugs zusammen mit einem Fahrzeugmotor (10) angeordneten Servokupplung (11), die mittels eines ansteuerbaren Stellgliedes (15) im Sinne eines Öffnens und Schließens betätigt wird, wobei
- eine Drehzahlgröße (n_m), die eine Drehbewegung eines Drehteils im Antriebsstrang repräsentiert, erfaßt wird,
- eine die zeitliche Änderung der erfaßten Drehzahlgröße repräsentierende Gradientengröße (grad_n_m) ermittelt wird,
- das Stellglied (15) abhängig von der erfaßten Drehzahlgröße (n_m) und abhängig von der ermittelten Gradientengröße (grad_n_m) im Sinne eines Öffnens der Kupplung angesteuert wird,
**dadurch gekennzeichnet, dass**
- die Geschwindigkeit des Öffnens der Kupplung wenigstens abhängig von der erfaßten Drehzahlgröße (n_m) geschieht.

2. Verfahren nach Anspruch 1, **dadurch gekennzeichnet, dass** die Drehzahlgröße (n_m) mit einem vorgegebenen oder vorgebbaren ersten Schwellenwert (n_auf_1) verglichen wird und das Stellglied (15) abhängig von dem Vergleich im Sinne eines Öffnens der Kupplung angesteuert wird, wobei insbesondere vorgesehen ist, dass das Stellglied (15) im Sinne eines Öffnens der Kupplung dann angesteuert wird, wenn die Drehzahlgröße den ersten Schwellenwert unterschreitet.

3. Verfahren nach Anspruch 1 oder 2, **dadurch gekennzeichnet**, d.ss die Drehzahlgröße (n_m) mit einem vorgegebenen oder vorgebbaren zweiten Schwellenwert (n_auf_2) verglichen wird und das Stellglied (15) nur dann abhängig von der ermittelten Gradientengröße (grad_n_m) im Sinne eines Öffnens der Kupplung angesteuert wird, wenn die Drehzahlgröße den zweiten Schwellwert unterschreitet.

4. Verfahren nach Anspruch 2 und 3, **dadurch gekennzeichnet, dass** der erste Schwellenwert (n_auf_1) kleiner ist als der zweite Schwellenwert (n_auf_2).

5. Verfahren nach Anspruch 1, **dadurch gekennzeichnet, dass** die Gradientengröße (grad_n_m) mit einem vorgegebenen oder vorgebbaren dritten Schwellenwert (n_grad_auf) verglichen wird und das Stellglied (15) abhängig von dem Vergleich im Sinne eines Öffnens der Kupplung angesteuert wird, wobei insbesondere vorgesehen ist, dass das Stellglied (15) im Sinne eines Öffnens der Kupplung dann angesteuert wird, wenn die Gradientengröße den dritten Schwellenwert unterschreitet.

6. Verfahren nach Anspruch 2, **dadurch gekennzeichnet, dass** der erste Schwellenwert (n_auf_1) abhängig von der Gradienten größe (grad_n_m) vorgegeben wird, wobei insbesondere vorgesehen ist, dass der erste Schwellenwert durch eine Rechenvorschrift oder eine Kennlinie oder ein Kennfeld wenigstens abhängig von der Gradientengröße (grad_n_m) vorgegeben wird.

7. Verfahren nach Anspruch 1 oder einem der Ansprüche 2 bis 6, **dadurch gekennzeichnet, dass**
- wenigstens abhängig von der Gradientengröße (grad_n_m) entschieden wird, ob eine Ansteuerung der Kupplung im Sinne eines Öffnens der Kupplung stattfindet und
- die Geschwindigkeit des Öffnens der Kupplung weiterhin abhängig von der ermittelten Gradientengröße (grad_n_m) geschieht.

8. Verfahren nach Anspruch 7, dass
- die Kupplung bei kleineren Werten der Drehzahlgröße (n_m) schneller geöffnet wird als bei größeren Werten der Drehzahlgröße (n_m), und/oder
- die Kupplung bei kleineren Werten der Gradientengröße (grad_n_m) schneller geöffnet wird als bei größeren Werten der Gradientengröße (grad_n_m).

9. Verfahren nach Anspruch 1, **dadurch gekennzeichnet, dass** die Ansteuerung des Stellgliedes im Sinne eines Öffnens der Kupplung durch ein Ansteuersignal (S) geschieht, wobei das Ansteuersignal (S) abhängig von der erfaßten Drehzahlgröße (n_m) und abhängig von der ermittelten Gradientengröße (grad_n_m) gebildet wird.

10. Vorrichtung zur Steuerung einer im Antriebsstrang eines Kraftfahrzeugs zusammen mit einem Fahrzeugmotor (10) angeordneten Servokupplung (11), die mittels eines ansteuerbaren Stellgliedes (15) im Sinne eines Öffnens und Schließens betätigt wird, wobei Mittel (14) vorgesehen sind, mittels der
- eine Drehzahlgröße (n_m), die eine Drehbewegung eines Drehteils im Antriebsstrang repräsentiert, erfaßt wird,
- eine die zeitliche Änderung der erfaßten Drehzahlgröße repräsentierende Gradientengröße (grad_n_m) ermittelt wird,
- das Stellglied (15) abhängig von der erfaßten Drehzahlgröße (n_m) und abhängig von der ermittelten Gradientengröße (grad_n_m) im Sinne eines Öffnens der Kupplung angesteuert wird,
**dadurch gekennzeichnet, dass**
- die Geschwindigkeit des Öffnens der Kupplung wenigstens abhängig von der erfaßten Drehzahlgröße (n_m) geschieht.

## Claims

1. Method for controlling a servo clutch (11) which is arranged in the drive train of a motor vehicle together with a vehicle engine (10) and which is activated by means of an actuable actuator element (15) in the sense of opening and closing,
- a rotational speed variable (n_m) which represents a rotational movement of a rotary part in the drive train, being sensed,
- a gradient variable (grad_n_m) which represents the change in the sensed rotational speed variable over time being determined,
- the actuator element (15) being actuated as a function of the sensed rotational speed variable (n_m) and as a function of the determined gradient variable (grad_n_m) in the sense of opening the clutch,
**characterized in that**
- the speed of the opening of the clutch is at least dependent on the sensed rotational speed variable (n_m).

2. Method according to Claim 1, **characterized in that** the rotational speed variable (n_m) is compared with a predefined or predefinable first threshold value (n_auf_1), and the actuator element (15) is actuated as a function of the comparison in the sense of opening the clutch, there being in particular provision for the actuator element (15) to be actuated in the sense of opening the clutch whenever the rotational speed variable drops below the first threshold value.

3. Method according to Claim 1 or 2, **characterized in that** the rotational speed variable (n_m) is compared with a predefined or predefinable second threshold value (n_auf_2), and the actuator element (15) is actuated as a function of the determined gradient variable (grad_n_m) in the sense of opening the clutch only if the rotational speed variable drops below the second threshold value.

4. Method according to Claim 2 and 3, **characterized in that** the first threshold value (n_auf_1) is smaller than the second threshold value (n_auf_2).

5. Method according to Claim 1, **characterized in that** the gradient variable (grad_n_m) is compared with a predefined or predefinable third threshold value (n_grad_auf), and the actuator element (15) is actuated as a function of the comparison in the sense of opening the clutch, there being in particular provision for the actuator element (15) to be actuated in the sense of opening the clutch whenever the gradient variable drops below the third threshold value.

6. Method according to Claim 2, **characterized in that** the first threshold value (n_auf_1) is predefined as a function of the gradient variable (grad_n_m), there being in particular provision for the first threshold value to be predefined by a computing rule or a characteristic curve or a characteristic diagram at least as a function of the gradient variable (grad_n_m).

7. Method according to Claim 1, or one of Claims 2 to 6, **characterized in that**
- it is decided, at least as a function of the gradient variable (grad_n_m), whether actuation of the clutch in sense of opening the clutch takes place, and
- the speed of the opening of the clutch continues to be dependent on the determined gradient variable (grad_n_m).

8. Method according to Claim 7, **characterized in that**
- the clutch is opened more quickly at relatively small values of the rotational speed variable (n_m) than at relatively large values of the rotational speed variable (n_m), and/or
- the clutch is opened more quickly at relatively small values of the gradient variable (grad_n_m) than at relatively large values of the gradient value (grad_n_m).

9. Method according to Claim 1, **characterized in that** the actuation of the actuator element in the sense of opening the clutch occurs by means of an actuation signal (S), the actuation signal (S) being formed as a function of sensed rotational speed variable (n_m) and/or as a function of the determined gradient variable (grad_n_m).

10. Device for controlling a servo clutch (11) which is arranged in the drive train of a motor vehicle together with a vehicle engine (10) and which is activated, by means of an actuable actuator element (15), in the sense of opening and closing, means (14) being provided which are used
- to sense a rotational speed variable (n_m) which represents a rotational movement of a rotary part in the drive train,
- to determine a gradient variable (grad_n_m) which represents the change in the sensed rotational speed variable over time,
- to actuate the actuator element (15) as a function of the sensed rotational speed variable (n_m) and as a function of the determined gradient variable (grad_n_m) in the sense of opening the clutch,
**characterized in that**
- the speed of the opening of the clutch is at least dependent on the sensed rotational speed variable (n_m).

## Revendications

1. Procédé destiné à commander un embrayage asservi (11) qui est disposé conjointement avec un moteur de véhicule (10) dans la ligne d'entraînement d'un véhicule automobile et qui est actionné à l'aide d'un actionneur (15) réglable au sens d'une ouverture et d'une fermeture, selon lequel
- on détecte une grandeur de vitesse de rotation (n_m) qui représente un mouvement de rotation d'une partie tournante dans la ligne d'entraînement,
- on établit une grandeur de gradient (grad_n_m) qui représente la modification dans le temps de la grandeur de vitesse de rotation détectée,
- l'actionneur (15) est commandé en fonction de la grandeur de vitesse de rotation (n_m) détectée et en fonction de la grandeur de gradient (grad_n_m) établie au sens d'une ouverture de l'embrayage,
**caractérisé en ce que**
- la vitesse de l'ouverture de l'embrayage est réalisée au moins en fonction de la grandeur de vitesse de rotation (n_m) détectée.

2. Procédé selon la revendication 1,
**caractérisé en ce que**
la grandeur de vitesse de rotation (n_m) est comparée avec une première valeur seuil (n_auf_1) prédéterminée ou prédéterminable et l'actionneur (15) est commandé en fonction de la comparaison au sens d'une ouverture de l'embrayage, en prévoyant en particulier que l'actionneur (15) est commandé au sens d'une ouverture de l'embrayage lorsque la grandeur de vitesse de rotation se situe en-dessous de la première valeur seuil.

3. Procédé selon la revendication 1 ou 2,
**caractérisé en ce que**
la grandeur de vitesse de rotation (n_m) est comparée avec une deuxième valeur seuil (n_auf_2) prédéterminée ou prédéterminable et l'actionneur (15) n'est commandé en fonction de la grandeur de gradient (grand_n_m) établie au sens d'une ouverture de l'embrayage que lorsque la grandeur de vitesse de rotation se situe en-dessous de la deuxième valeur seuil.

4. Procédé selon les revendications 2 et 3,
**caractérisé en ce que**
la première valeur seuil (n_auf_1) est inférieure à la deuxième valeur seuil (n_auf_2).

5. Procédé selon la revendication 1,
**caractérisé en ce que**
la grandeur de gradient (grad_n_m) est comparée avec une troisième valeur seuil (n_grad_auf) prédéterminée ou prédéterminable et l'actionneur (15) est commandé en fonction de la comparaison au sens d'une ouverture de l'embrayage, en prévoyant en particulier que l'actionneur (15) est commandé au sens d'une ouverture de l'embrayage lorsque la grandeur de gradient se situe en-dessous de la troisième valeur seuil.

6. Procédé selon la revendication 2,
**caractérisé en ce que**
la première valeur seuil (n_auf_1) est prédéterminée en fonction de la grandeur de gradient (grad_n_m), en prévoyant en particulier que la première valeur seuil est prédéterminée au moins en fonction de la grandeur de gradient (grad_n_m) par une règle de calcul ou par une courbe caractéristique ou par un champ caractéristique.

7. Procédé selon la revendication 1 ou l'une des revendications 2 à 6,
**caractérisé en ce que**
- l'on décide au moins en fonction de la grandeur de gradient (grad_n_m) si une commande de l'embrayage a lieu au sens d'une ouverture de l'embrayage,
- la vitesse de l'ouverture de l'embrayage est en outre réalisée en fonction de la grandeur de gradient (grad_n_m) établie.

8. Procédé selon la revendication 7,
**caractérisé en ce que**
- lorsque la grandeur de vitesse de rotation (n_m) prend des valeurs assez petites l'embrayage est ouvert plus rapidement que lorsque la grandeur de vitesse de rotation (n_m) prend des valeurs assez grandes et/ou
- lorsque la grandeur de gradient (grad_n_m) prend des valeurs assez petites l'embrayage est ouvert plus rapidement que lorsque la grandeur de gradient (grad_n_m) prend des valeurs assez grandes.

9. Procédé selon la revendication 1,
**caractérisé en ce que**
la commande de l'actionneur au sens d'une ouverture de l'embrayage est réalisée par un signal de commande (S), le signal de commande (S) étant formé en fonction de la grandeur de vitesse de rotation (n_m) détectée et en fonction de la grandeur de gradient (grad_n_m) établie.

10. Dispositif pour commander un embrayage asservi (11) qui est disposé conjointement avec un moteur de véhicule (10) dans la ligne d'entraînement d'un véhicule automobile et qui est actionné à l'aide d'un actionneur (15) réglable au sens d'une ouverture et d'une fermeture, à l'aide duquel
- on détecte une grandeur de vitesse de rotation (n_m) qui représente un mouvement de rotation d'une partie tournante dans la ligne d'entraînement,
- on établit une grandeur de gradient (grad_n_m) qui représente la modification dans le temps de la grandeur de vitesse de rotation détectée,
- l'actionneur (15) est commandé en fonction de la grandeur de vitesse de rotation (n_m) détectée et en fonction de la grandeur de gradient (grad_n_m) établie au sens d'une ouverture de l'embrayage,
**caractérisé en ce que**
- la vitesse de l'ouverture de l'embrayage est réalisée au moins en fonction de la grandeur de vitesse de rotation (n_m) détectée.
